# FASCICULE DE BREVET EUROPEEN

(11) **EP 3 303 850 B1**
(45) Date de publication et mention de la délivrance du brevet: **04.08.2021**
(21) Numéro de dépôt: 16733169.3
(22) Date de dépôt: 08.06.2016
(51) Int. Cl.: F04D 29/32, F04D 29/64, F04D 29/66, F01D 5/02, F01D 5/28

(54) **PROCÉDÉ DE FABRICATION D'UNE SOUFFLANTE DE TURBOMACHINE AYANT UN NIVEAU DE BRUIT RÉDUIT A DES FRÉQUENCES MULTIPLES DE ROTATION DE LADITE TURBOMACHINE**
VERFAHREN ZUR HERSTELLUNG EINES TURBOMASCHINENGEBLÄSES MIT REDUZIERTEM GERÄUSCHPEGEL BEI MEHREREN DREHFREQUENZEN DER TURBOMASCHINE
METHOD FOR MANUFACTURING A TURBOMACHINE FAN HAVING A REDUCED NOISE LEVEL AT MULTIPLE ROTATIONAL FREQUENCIES OF SAID TURBOMACHINE

(30) Priorité: 08.06.2015 FR 1555209
(43) Date de publication de la demande: 11.04.2018
(73) Titulaire: Safran Aircraft Engines, 75015 Paris (FR)
(72) Inventeur: LAFITTE, Anthony, Bernard, Germain, 77550 Moissy-Cramayel (FR); BRUHAT, Jean-Frédéric, Pierre, Joseph, 77550 Moissy-Cramayel (FR); POUZADOUX, Frédéric, Jean-Bernard, 77550 Moissy-Cramayel (FR); ROUX, Jean-Michel, 77550 Moissy-Cramayel (FR)
(74) Mandataire: Regimbeau
(86) Numéro de dépôt international: PCT/FR2016/051377
(87) Numéro de publication internationale: WO 2016/198790

(56) Documents cités:
- EP-A1- 1 382 858
- EP-A1- 2 400 114
- EP-A2- 1 679 426
- US-A1- 2006 010 686

## Description

### DOMAINE TECHNIQUE GENERAL

La présente demande se rapporte aux aubes de turbomachine, notamment aux aubes de soufflante de turbomachine. Plus précisément, la présente demande concerne un procédé de fabrication d'une soufflante de turbomachine produisant un niveau de bruit réduit à des fréquences multiples de rotation de ladite soufflante.

### ETAT DE L'ART

Une turbomachine comprend généralement, d'amont en aval, dans le sens d'écoulement des gaz, une soufflante, un ou plusieurs étages de compresseurs, par exemple un compresseur basse pression et un compresseur haute pression, une chambre de combustion, un ou plusieurs étages de turbine, par exemple une turbine haute pression et une turbine basse pression, et une tuyère d'échappement des gaz. Une telle turbomachine équipe généralement un aéronef.

De manière classique, la soufflante est entraînée et supportée par un arbre tournant lequel est relié à un disque accueillant une pluralité d'aubes.

Lors des phases de décollage de l'aéronef, la soufflante d'une turbomachine opère généralement en régime transsonique. Autrement dit, la vitesse relative de la soufflante est subsonique en pied d'aube et supersonique en tête d'aube. Des ondes de choc se forment alors sur une partie de l'envergure desdites aubes et rayonnent vers l'amont de la soufflante, dans la manche d'entrée d'air de la turbomachine

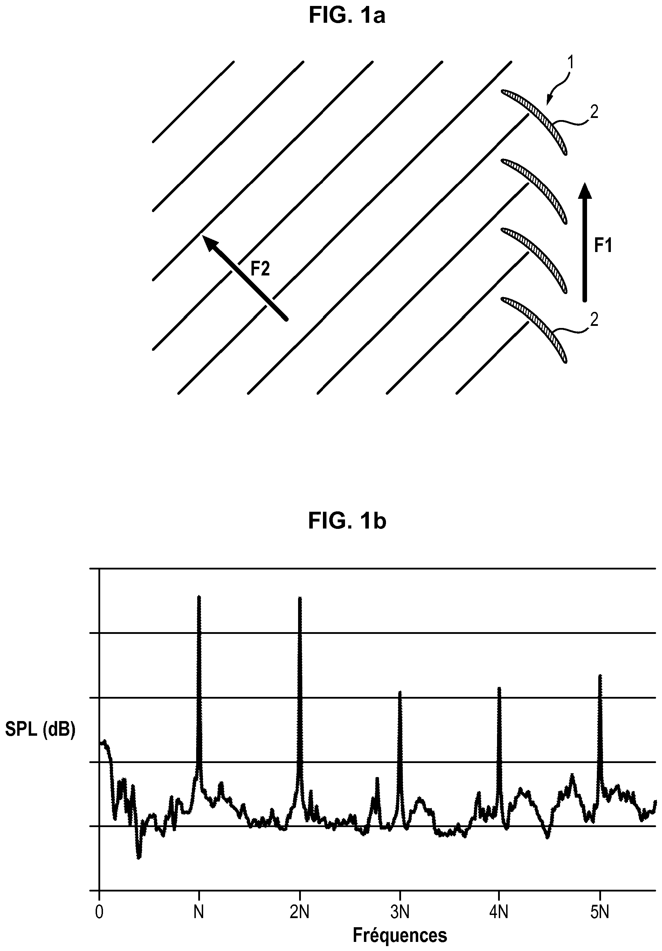

La figure 1a illustre la propagation des chocs dans la manche d'entrée d'air dans le cas d'une soufflante 1 « parfaite » comprenant un nombre N d'aubes 2. Sur la figure 1a, la flèche F1 correspond au sens de rotation de la soufflante 1, et la flèche F2 le sens de propagation des chocs générés par la soufflante 1. On remarquera sur cette figure que dans le cas d'une soufflante 1 parfaite, la propagation des chocs suit une périodicité en 2π/N.

La figure 1b illustre le spectre acoustique de la soufflante 1 parfaite, mesuré en amont de ladite soufflante 1 en champ proche, par exemple au niveau du fuselage de l'aéronef proche de la soufflante 1. Le spectre fait apparaître un bruit fort tonal à des fréquences dites BPF (de passage de chacune des aubes, en terminologie anglo-saxonne « blade passing frequency »). Ces fréquences BPF sont égales à N*R, où R correspond au régime moteur de la turbomachine.

En réalité, l'amplitude des sauts de pression générés sur l'envergure des aubes est si grande que la propagation des chocs dans la manche d'entrée d'air est non linéaire, ce qui rend la propagation très sensible à la moindre perturbation.

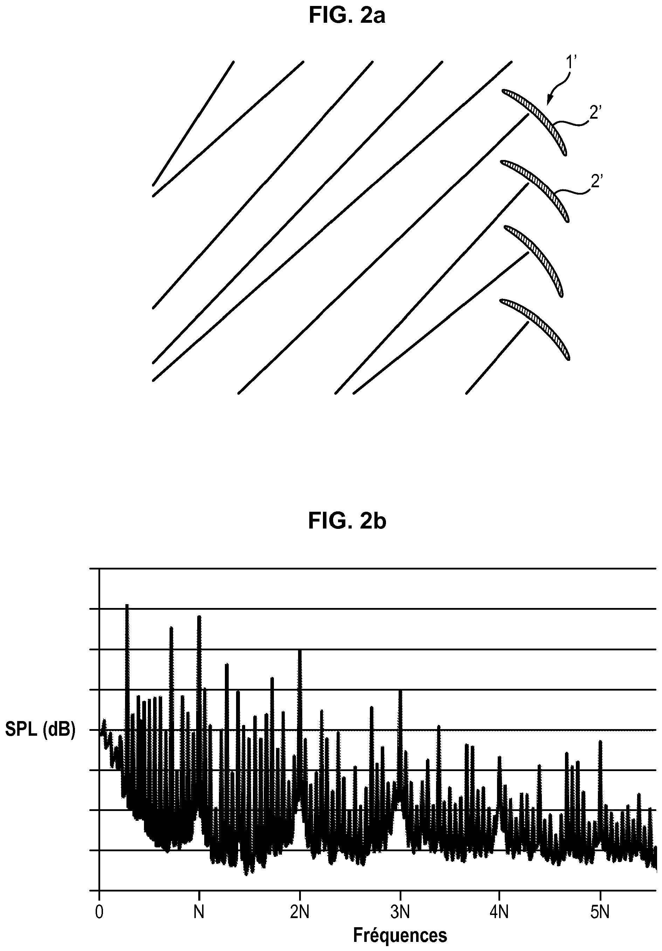

Or, dans le cas d'une soufflante 1' « réelle » (figure 2a), les aubes 2' présentent, à l'issue de leur fabrication, des différences géométriques, ce qui introduit une modulation en amplitude et en phase lors de la génération/propagation des chocs. Ces écarts s'accroissent au cours de la propagation non linéaire dans la manche d'entrée jusqu'à rompre la périodicité des chocs en 2π/N. La rupture de la périodicité des chocs en 2π/N est illustrée à la figure 2a, et l'effet de cette rupture de périodicité des chocs sur le spectre acoustique de la soufflante 1' réelle mesuré en amont de ladite soufflante 1' en champ proche est illustré à la figure 2b. Le spectre fait apparaître un bruit fort tonal à des fréquences dites FMR (fréquences multiples de rotation) de la soufflante 1'.

L'apparition de bruit à ces fréquences FMR est particulièrement problématique. En effet, le bruit émis par la soufflante 1' ressemble alors à celui émis par une scie électrique et se trouve donc être particulièrement gênant pour les passagers se trouvant à bord de l'aéronef. Ce bruit peut en outre être gênant pour les riverains de zones de décollage/atterrissage de l'aéronef.

En effet, il est mal atténué par les éléments de traitement acoustiques disposés dans la manche d'entrée de la turbomachine, ces derniers étant généralement conçus pour atténuer le bruit aux fréquences BPF. Par ailleurs, le bruit émis aux fréquences FMR les plus basses est difficilement atténué par le fuselage de l'aéronef. En effet, le fuselage structurellement atténue certaines plages de fréquences, notamment les hautes fréquences et les très basses fréquences. En revanche, il existe une plage de fréquences (typiquement autour de quelques centaines de Hz) sur laquelle l'atténuation engendrée par le fuselage est minimale.

Pour pallier l'apparition de bruit aux fréquences FMR, sont connues des méthodes pour déterminer l'ordonnancement des aubes d'une soufflante autour du disque de manière à minimiser le bruit à ces fréquences FMR.

De telles méthodes sont par exemple décrites dans les documents US 4,732,532, US 2006/0029493, US 2006/0010686, US 2006/0013692, US 2008/0027686 et US 2006/0188374. Ces méthodes sont basées sur la mesure à froid d'un ou plusieurs paramètres géométriques (l'angle de calage par exemple) sur chacune des aubes destinées à être montées sur le disque, puis sur la détermination de l'ordonnancement des aubes à partir des mesures à froid de ces paramètres géométriques de sorte à limiter l'écart entre aubes successives de ces paramètres géométriques mesurés à froid. On entend par « mesure à froid », une mesure réalisée sur une aube après sa fabrication mais avant son montage sur le disque.

De récents essais ont montrés que les différences géométriques d'aube à aube, c'est-à-dire entre deux aubes successives ou directement voisines, influent sur le niveau de bruit aux fréquences FMR. Ainsi, plus les disparités géométriques entre aubes successives sont importantes, plus le niveau de bruit aux fréquences FMR est élevé. On comprendra donc que les méthodes précédemment décrites permettent effectivement de réduire le niveau de bruit aux fréquences FMR.

Cependant, l'effet de ces méthodes sur le bruit aux fréquences FMR reste limité. En effet, lorsque la turbomachine est en fonctionnement et que les aubes sont en rotation et chargées aérodynamiquement, les aubes peuvent avoir des comportements à chaud, notamment un dévrillage et un allongement, mais aussi des vibrations, différents d'une aube à l'autre. De ce fait, en fonctionnement, les écarts entre les paramètres géométriques des aubes prises successivement sont modifiés, ce qui remet en cause l'ordonnancement déterminé à partir des mesures à froid des paramètres géométriques des aubes.

Un procédé pour la fabrication d'une soufflante de turbomachine selon l'art antérieur est décrit dans le document EP 1 679 426 A2.

### PRESENTATION DE L'INVENTION

La présente invention répond à ce problème en proposant un procédé de fabrication d'une soufflante de turbomachine selon la revendication 1, dans lequel le comportement à chaud des aubes est pris en compte pour déterminer l'ordonnancement des aubes autour du disque de la soufflante.

Plus précisément, la présente invention a pour objet un procédé pour la fabrication d'une soufflante de turbomachine comprenant une pluralité d'aubes montées sur un disque s'étendant selon un axe longitudinal, ledit procédé comprenant les étapes suivantes de :
- mesure à froid d'au moins un paramètre structurel sur chacune des aubes, et pour chacune des aubes, estimation d'au moins un paramètre structurel en fonctionnement relatif à une aube à partir du ou des paramètres structuraux mesurés à froid sur ladite aube,
- détermination d'un ordonnancement optimal des aubes autour du disque à partir des paramètres structuraux estimés en fonctionnement pour chacune des aubes, de sorte à réduire le niveau de bruit à des fréquences multiples de rotation de la soufflante, et
- montage des aubes sur le disque selon l'ordonnancement optimal ainsi déterminé.

Ainsi, l'ordonnancement optimal des aubes autour du disque est déterminé à partir des paramètres structuraux des aubes estimés en fonctionnement et non pas uniquement à partir des paramètres structuraux des aubes mesurés à froid. Cela permet de prendre en compte, pour la détermination de l'ordonnancement optimal, le comportement des aubes lorsque la turbomachine est en fonctionnement, et donc de réduire plus efficacement le niveau de bruit aux fréquences multiples de rotation de la soufflante.

Avantageusement, l'estimation en fonctionnement du ou des paramètres structuraux d'une aube est réalisée à partir du ou des paramètres structuraux mesurés à froid sur ladite aube et d'une surface de réponse prédictive préalablement générée par la méthode des surfaces de réponse à laquelle sont appliqués le ou les paramètres structuraux mesurés à froid sur l'aube.

Avantageusement, le ou les paramètres structuraux mesurés à froid de l'aube sont choisis parmi :
- la position du centre de gravité d'une section de l'aube à une hauteur de coupe donnée de ladite aube, et/ou
- l'angle de calage de l'aube à une hauteur de coupe donnée de ladite aube, et/ou
- l'angle de bord d'attaque de l'aube à une hauteur de coupe donnée de ladite aube, et/ou
- l'angle de bord de fuite de l'aube à une hauteur de coupe donnée de ladite aube.

Avantageusement, le ou les paramètres structuraux mesurés à froid de l'aube sont choisis parmi :
- la position du centre de gravité d'une section de l'aube à une hauteur de coupe donnée de ladite aube, et/ou
- la longueur de la corde de l'aube à une hauteur de coupe donnée de ladite aube, et/ou
- l'angle de calage de l'aube à une hauteur de coupe donnée de ladite aube, et/ou
- l'angle de bord d'attaque de l'aube à une hauteur de coupe donnée de ladite aube, et/ou
- l'angle de bord de fuite de l'aube à une hauteur de coupe donnée de ladite aube, et/ou
- la hauteur totale de l'aube, et/ou
- le moment statique radial et/ou axial et/ou tangentiel de l'aube, et/ou
- la masse de l'aube.

Avantageusement, le ou les paramètres structuraux estimés en fonctionnement de l'aube sont choisis parmi :
- l'angle de calage de l'aube à une hauteur de coupe donnée de ladite aube, et/ou
- l'angle de bord d'attaque de l'aube à une hauteur de coupe donnée de ladite aube, et/ou
- l'angle de bord de fuite de l'aube à une hauteur de coupe donnée de ladite aube.

Avantageusement, le ou les paramètres structuraux estimés en fonctionnement de l'aube sont choisis parmi :
- la position du centre de gravité d'une section de l'aube à une hauteur de coupe donnée de ladite aube, et/ou
- la longueur de la corde de l'aube à une hauteur de coupe donnée de ladite aube, et/ou
- l'angle de calage de l'aube à une hauteur de coupe donnée de ladite aube, et/ou
- l'angle de bord d'attaque de l'aube à une hauteur de coupe donnée de ladite aube, et/ou
- l'angle de bord de fuite de l'aube à une hauteur de coupe donnée de ladite aube, et/ou
- la hauteur totale de l'aube, et/ou
- le moment statique radial et/ou axial et/ou tangentiel de l'aube, et/ou
- la masse de l'aube.

Préférentiellement, la hauteur de coupe donnée est prise à 90% de la hauteur totale de l'aube à partir du pied de ladite aube.

La présente invention a également pour objet une soufflante de turbomachine susceptible d'être obtenue par la mise en œuvre du procédé de fabrication tel que précédemment décrit.

La présente invention a également pour objet une turbomachine comprenant une soufflante telle que précédemment décrite.

### PRESENTATION DES FIGURES

D'autres caractéristiques, buts et avantages de l'invention ressortiront de la description qui suit, qui est purement illustrative et non limitative, et qui doit être lue en regard des dessins annexés sur lesquels :
- les figures 1a et 1b représentent respectivement la propagation de chocs dans la manche d'entrée d'une soufflante « parfaite », et le spectre de bruit de cette soufflante en champ proche ;
- les figures 2a et 2b représentent respectivement la propagation de chocs dans la manche d'entrée d'une soufflante « réelle », et le spectre de bruit de cette soufflante en champ proche ;
- la figure 3 représente un exemple de turbomachine comprenant une soufflante susceptible d'être obtenue par un procédé de fabrication d'une soufflante de turbomachine selon un mode de réalisation de l'invention ;
- les figures 4a et 4b représentent respectivement une vue de côté d'une aube, et des vues en coupe à différentes hauteurs de ladite aube;
- les figures 5a et 5b illustrent différents paramètres structuraux mesurables sur une aube ;
- la figure 6 représente le procédé de fabrication d'une soufflante de turbomachine selon un mode de réalisation de l'invention ;
- la figure 7 illustre différents paramètres structuraux mesurables sur une aube,
- les figures 8a et 8b illustrent différents paramètres structuraux mesurables sur une aube, respectivement suivant une vue de côté et une vue de derrière de l'aube.

### DESCRIPTION DETAILLEE

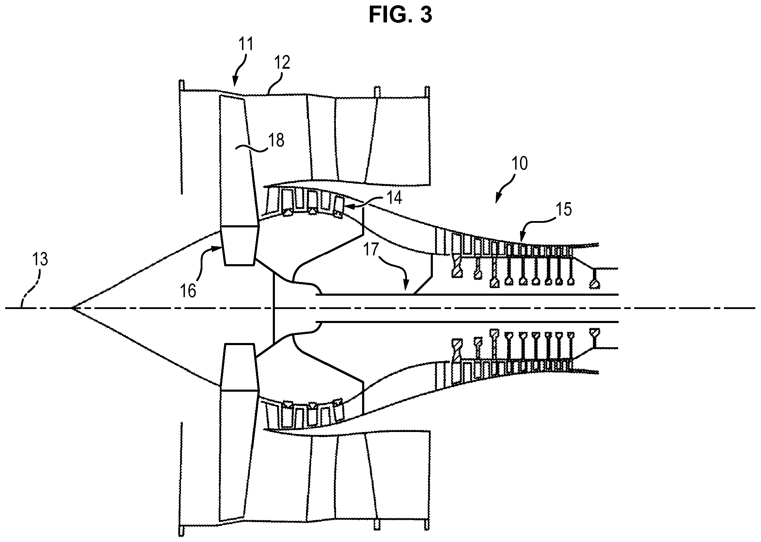

La figure 3 montre un exemple d'une turbomachine 10 d'aéronef comprenant une soufflante 11 obtenue par la mise en œuvre d'un procédé 100 de fabrication.

La turbomachine 10 comprend une nacelle 12 s'étendant selon un axe longitudinal 13 et au sein de laquelle sont ménagés, d'amont en aval, dans le sens d'écoulement des gaz, la soufflante 11, un compresseur basse pression 14, un compresseur haute pression 15, une chambre de combustion, une turbine haute pression, une turbine basse pression, et une tuyère d'échappement des gaz, non représentés.

La soufflante 11 est entraînée et supportée par un disque 16 relié à un arbre tournant 17.

La soufflante 11 comprend en outre une pluralité d'aubes 18 ordonnées autour du disque 16. Dans le cadre de l'invention, les aubes 18 sont ordonnées selon un ordonnancement optimal ORD déterminé au cours du procédé 100 de fabrication de la soufflante 11 de sorte que le niveau de bruit généré par la soufflante 11 soit minimum à des fréquences multiples de rotation dites FMR de ladite soufflante 11, lorsque la turbomachine 10 est en fonctionnement.

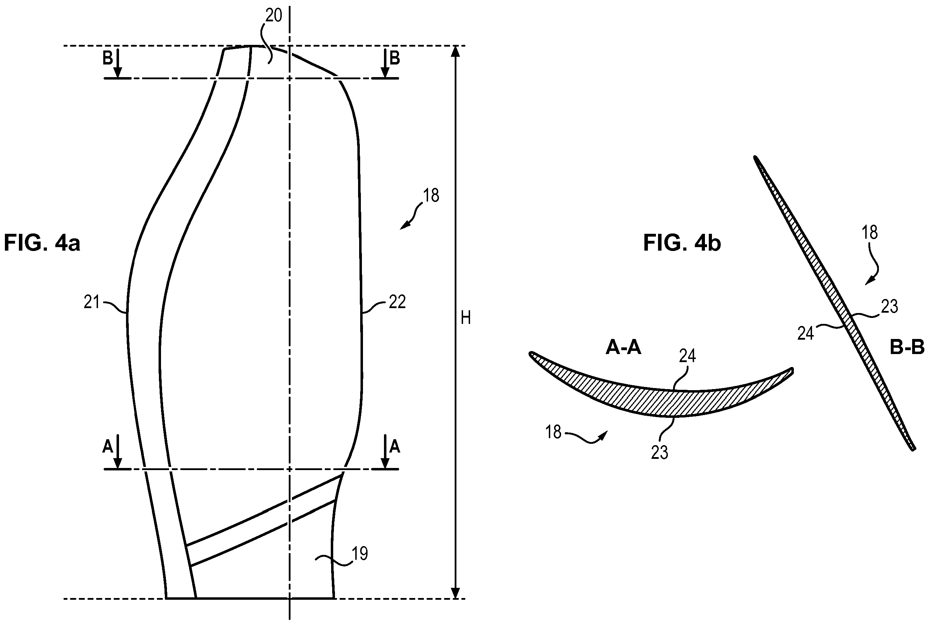

Un exemple d'aube 18 est illustré aux figures 4a et 4b. On voit sur ces figures que l'aube 18 présente un pied d'aube 19 correspondant à l'extrémité de l'aube 18 supportée par le disque 16 et une tête d'aube 20 correspondant à son extrémité opposée, en regard de la nacelle 12 de la turbomachine 10. On voit également que l'aube 18 présente d'amont en aval dans le sens d'écoulement des gaz, un bord d'attaque 21 et un bord de fuite 22. On voit en particulier sur la figure 4b que le profil de l'aube 18 présente une cambrure définissant d'une part une face 23 globalement convexe appelée « extrados » et d'autre part une face 24 globalement concave appelée « intrados ».

L'aube est composée d'une pluralité de sections que l'on « empile » les unes sur les autres selon une loi d'empilage donnée. La loi d'empilage peut par exemple être une courbe reliant l'ensemble des centres de gravité des différentes sections composant l'aube.

On définit un repère orthogonal X, Y, Z, dans lequel l'axe X est parallèle avec l'axe longitudinal 13 de la turbomachine 10. Le repère X, Y, Z est par exemple direct et son origine est choisie de façon arbitraire. Par exemple, on peut prendre l'origine du repère au centre de la roue aubagée.

On appelle « hauteur totale » de l'aube 18, la distance H entre l'extrémité supérieure de l'aube 18, au niveau de la tête d'aube 20, projetée sur l'axe Z et l'extrémité inférieure de l'aube 18, au-dessus du disque 16, au niveau du pied d'aube 19, projetée sur l'axe Z.

On définit la position du centre de gravité Gₛ d'une section de l'aube 18 prise à une hauteur de coupe donnée de l'aube 18 (coordonnée selon l'axe Z) par ses coordonnées X_{Gs} et Y_{Gs} dans le repère X, Y, Z, respectivement selon l'axe X et l'axe Y. La hauteur de coupe donnée h_{c} est typiquement définie comme un pourcentage de la hauteur totale H de l'aube 18 à partir du pied 19 de ladite aube.

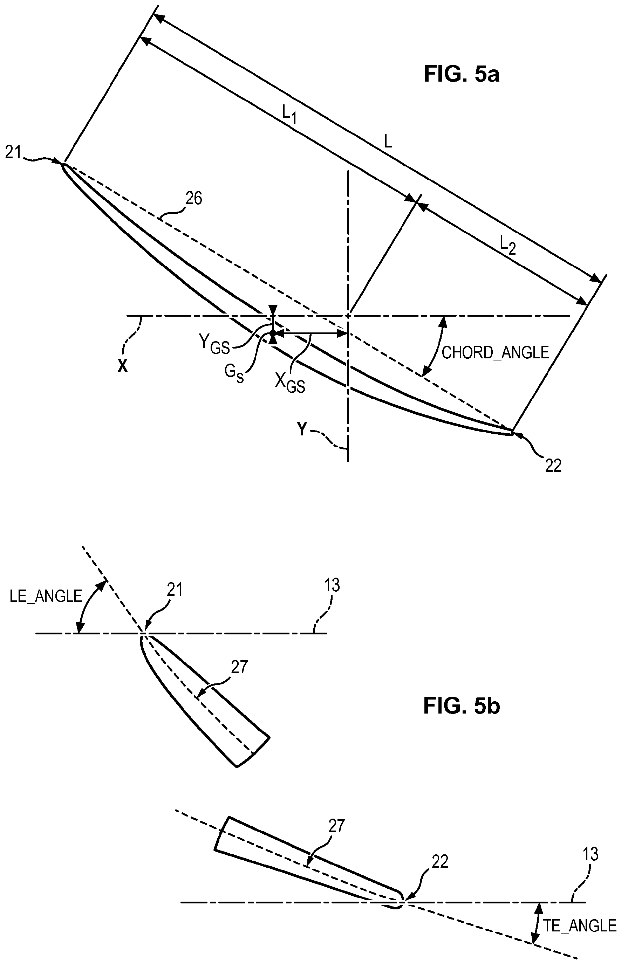

On appelle « corde » de l'aube 18, la section de droite 26, représentée sur la figure 5a, reliant le bord d'attaque 21 et le bord de fuite 22 de ladite aube 18. La corde 26 est par exemple définie par le paramètre L correspondant à la longueur totale de la corde 26, et/ou par le paramètre L1 correspondant à la longueur de la corde 26 du bord d'attaque 21 à l'axe Z, et/ou par le paramètre L2 correspond à la longueur de la corde 26 de Z au bord de fuite 22. Les paramètres L, L1 et L2 sont illustrés sur la figure 4b. Les paramètres L, L1 et L2 sont typiquement mesurés à une hauteur de coupe donnée h_{c} correspondant à un pourcentage de la hauteur totale H de l'aube 18.

On appelle « angle de calage », l'angle CHORD_ANGLE entre la corde 26 de l'aube 18 et l'axe X. Le paramètre CHORD_ANGLE est illustré à la figure 5a. Le paramètre CHORD_ANGLE est typiquement mesuré à une hauteur de coupe donnée h_{c} correspondant à un pourcentage de la hauteur totale H de l'aube.

On appelle « angle de bord d'attaque », l'angle LE_ANGLE tel que représenté sur la figure 5b, entre l'axe longitudinal 13 de la turbomachine 10 et la courbe du squelette 27 de l'aube 18 à un point placé à une distance donnée du bord d'attaque 21. La courbe de squelette 27 est définie pour chaque section de l'aube 18 comme la ligne moyenne du profil de ladite aube 18. Le paramètre LE_ANGLE est typiquement mesuré à une hauteur de coupe donnée h_{c} correspondant à un pourcentage de la hauteur totale H de l'aube 18. Le paramètre LE_ANGLE est illustré à la figure 5a.

On appelle « angle de bord de fuite », l'angle TE_ANGLE entre l'axe longitudinal 13 de la turbomachine 10 et la courbe du squelette 27 de l'aube 18 à un point placé à une distance donnée du bord de fuite 22. Le paramètre TE_ANGLE est typiquement mesuré à une hauteur de coupe donnée h_{c} correspondant à un pourcentage de la hauteur totale H de l'aube 18. Le paramètre TE_ANGLE est illustré à la figure 5b.

On appelle « épaisseur » du profil de l'aube 18, la distance entre l'intrados 24 et l'extrados 23 de ladite aube 18. L'épaisseur du profil de l'aube 18 est par exemple définie par l'épaisseur EA du profil de l'aube 18 à une distance donnée de son bord d'attaque 21, et/ou par l'épaisseur EF du profil de l'aube 18 à une distance donnée de son bord de fuite, et/ou de l'épaisseur maximale EMAX du profil de l'aube. Les paramètres EA, EF et EMAX sont typiquement mesurés à une hauteur de coupe donnée h_{c} correspondant à un pourcentage de la hauteur totale H de l'aube.

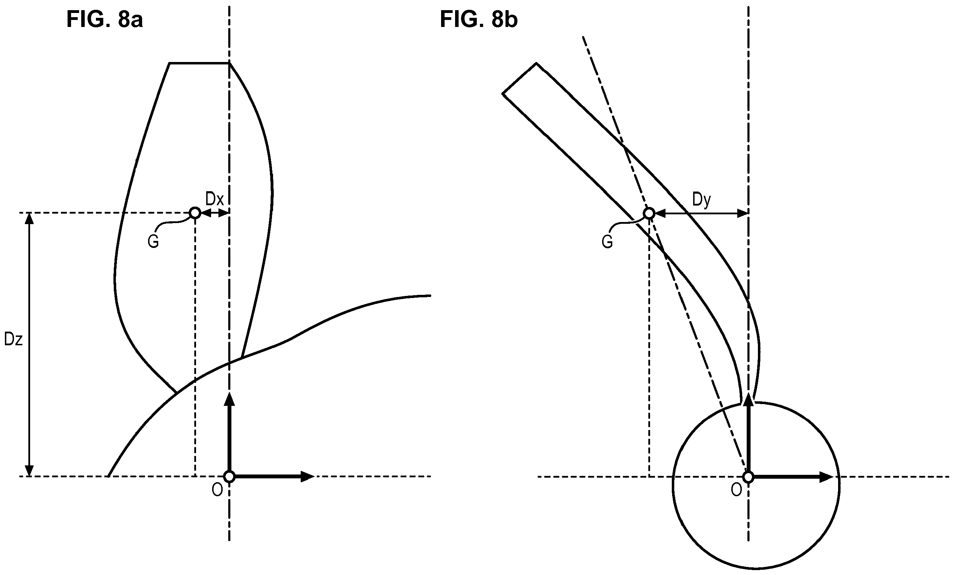

On appelle « moment statique radial R », le produit de la masse de l'aube 18 avec la coordonnée Dz du centre de gravité G de l'aube 18 selon l'axe Z. Le centre de gravité et la coordonnée Dz sont illustrés à la figure 8a.

On appelle « moment statique tangentiel T », le produit de la masse de l'aube 18 avec la coordonnée Dy du centre de gravité G de l'aube 18 selon l'axe Y. Le centre de gravité et la coordonnée Dy sont illustrés à la figure 8b.

On appelle « moment statique axial A », le produit de la masse de l'aube 18 avec la coordonnée Dx du centre de gravité G de l'aube 18 selon l'axe X. Le centre de gravité et la coordonnée Dx sont illustrés à la figure 8a.

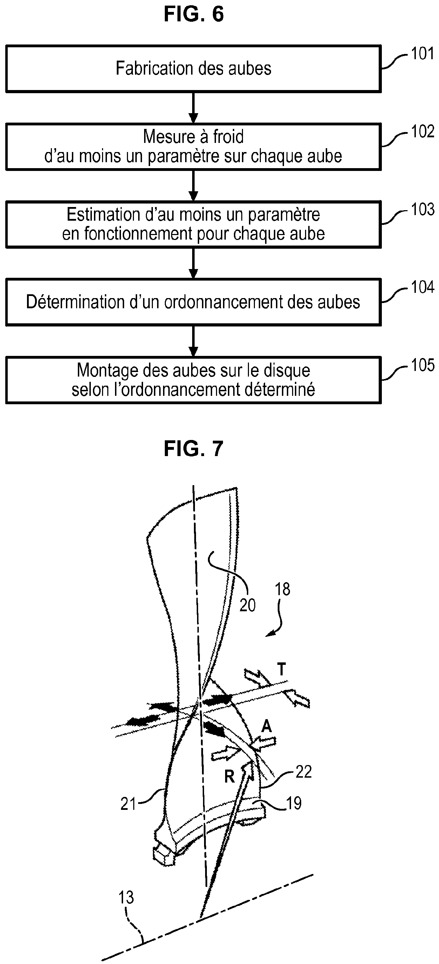

Les moments statiques radial R, tangentiel T et axial A sont illustrés à la figure 7.

La figure 6 montre un procédé 100 de fabrication de la soufflante 11 de turbomachine 10. Le procédé 100 comprend les étapes suivantes :
- fabrication 101 de la pluralité d'aubes 18 destinées à être montées sur le disque 16,
- mesure à froid 102 d'au moins un paramètre structurel sur chacune des aubes 18, et pour chacune des aubes 18, estimation 103 d'au moins un paramètre structurel en fonctionnement relatif à une aube 18 à partir du ou des paramètres structuraux mesurés à froid sur ladite aube 18,
- détermination 104 de l'ordonnancement optimal des aubes 18 autour du disque 16 à partir des paramètres structuraux estimés en fonctionnement pour chacune des aubes, de sorte à réduire le niveau de bruit aux fréquences FMR de la soufflante 11, et
- montage 105 des aubes 18 sur le disque 16 selon l'ordonnancement optimal ORD ainsi déterminé.

On entend par « paramètre structurel mesuré à froid », le paramètre structurel mesuré sur une aube 18 après fabrication 101 de ladite aube 18 et avant son montage 105 sur le disque 16. Les paramètres structuraux mesurés à froid sur chaque aube 18 sont par exemple :
- la position du centre de gravité X_{Gs}, Y_{Gs} d'une section de l'aube 18 à une hauteur de coupe donnée h_{c}, et/ou
- la longueur de la corde 26 de l'aube 18 (paramètre L et/ou paramètre L1 et/ou paramètre L2) à une hauteur de coupe donnée h_{c}, et/ou
- l'angle de calage CHORD_ANGLE de l'aube 18 à une hauteur de coupe donnée h_{c}, et/ou
- l'angle de bord d'attaque LE_ANGLE de l'aube 18 à une hauteur de coupe donnée h_{c}, et/ou
- l'angle de bord de fuite TE_ANGLE de l'aube 18 à une hauteur de coupe donnée h_{c}, et/ou
- la hauteur totale H de l'aube 18, et/ou
- les moments statiques radial R et/ou axial A et/ou tangentiel T de l'aube 18, illustrés à la figure 7, et/ou
- la masse de l'aube 18.

Les paramètres structuraux mesurés à froid sur chaque aube 18 sont de préférence :
- la position du centre de gravité X_{Gs}, Y_{Gs} d'une section de l'aube 18 à une hauteur de coupe donnée h_{c}, et/ou
- l'angle de calage CHORD_ANGLE de l'aube 18 à une hauteur de coupe donnée h_{c}, et/ou
- l'angle de bord d'attaque LE_ANGLE de l'aube 18 à une hauteur de coupe donnée h_{c}, et/ou
- l'angle de bord de fuite TE_ANGLE de l'aube 18 à une hauteur de coupe donnée h_{c}.

Les différents paramètres structuraux peuvent être mesurés à froid à des hauteurs de coupe données h_{c} de l'aube 18 différentes ou égales. Il est par exemple possible de mesurer l'angle de calage CHORD_ANGLE à 90% de la hauteur totale H de l'aube 18 et la coordonnée Y_{G} du centre de gravité d'une section de l'aube 18 à 95% de la hauteur totale H de l'aube 18.

On entend par « paramètre structurel estimé en fonctionnement », le paramètre structurel estimé d'une aube 18, lorsque ladite aube 18 est montée sur le disque 16 et que la turbomachine 10 est en fonctionnement. La turbomachine 10 est en fonctionnement lorsque le disque 16 sur lequel les aubes 18 ont été préalablement montées est entraîné en rotation par l'arbre tournant 17 autour de l'axe longitudinal 13. Les aubes 18 sont donc en rotation et sont chargées aérodynamiquement.

Les paramètres structuraux estimés en fonctionnement pour chacune des aubes 18 sont par exemple :
- la position du centre de gravité X_{Gs}, Y_{Gs} d'une section de l'aube 18 à une hauteur de coupe donnée h_{c}, et/ou
- la longueur de la corde 26 de l'aube 18 (paramètre L et/ou paramètre L1 et/ou paramètre L2) à une hauteur de coupe donnée h_{c}, et/ou
- l'angle de calage CHORD_ANGLE de l'aube 18 à une hauteur de coupe donnée h_{c}, et/ou
- l'angle de bord d'attaque LE_ANGLE de l'aube 18 à une hauteur de coupe donnée h_{c}, et/ou
- l'angle de bord de fuite TE_ANGLE de l'aube 18 à une hauteur de coupe donnée h_{c}, et/ou
- la hauteur totale H de l'aube 18, et/ou
- les moments statiques radial R et/ou axial A et/ou tangentiel T de l'aube 18, et/ou
- la masse de l'aube 18.

Les paramètres structuraux estimés en fonctionnement pour chacune des aubes 18 sont de préférence :
- l'angle de calage CHORD_ANGLE de l'aube 18 à une hauteur de coupe donnée h_{c}, et/ou
- l'angle de bord d'attaque LE_ANGLE de l'aube 18 à une hauteur de coupe donnée h_{c}, et/ou
- l'angle de bord de fuite TE_ANGLE de l'aube 18 à une hauteur de coupe donnée h_{c}.

Les étapes de mesure 102 à froid des paramètres structuraux des aubes 18 et d'estimation 103 des paramètres structuraux en fonctionnement des aubes 18 peuvent intervenir l'une après ou l'autre ou en simultané pour chaque aube 18.

Lors de l'étape d'estimation 103, le ou les paramètres structuraux mesurés à froid sur une aube 18 et le ou les paramètres structuraux estimés en fonctionnement de ladite aube 18 peuvent être de même nature ou de nature différente. Autrement dit, il est par exemple possible que le paramètre structurel mesuré à froid sur une aube 18 soit l'angle de calage CHORD_ANGLE et que le paramètre structurel estimé en fonctionnement de ladite 18 soit également l'angle de calage CHORD ANGLE. Il est également possible que le paramètre structurel mesuré à froid sur une aube 18 soit la masse de ladite aube 18 et que le paramètre structurel estimé en fonctionnement de ladite 18 soit l'angle de calage CHORD ANGLE.

Selon un mode de réalisation préféré de l'invention, l'estimation 103 en fonctionnement du ou des paramètres structuraux d'une aube 18 est réalisée à partir du ou des paramètres structuraux mesurés à froid sur ladite aube 18 et d'une surface de réponse prédictive préalablement générée par la méthode des surfaces de réponse (MSR). Le ou les paramètres structuraux en fonctionnement sont estimés pour un régime moteur donné. De préférence, le régime moteur donné correspond au régime moteur auquel la soufflante 11 est susceptible d'émettre le niveau de bruit FMR le plus élevé, lorsque la soufflante 11 est montée dans la turbomachine 10. Ce régime moteur donné dépend du moteur considéré.

La méthode des surfaces de réponse est une méthode statistique bien connue de l'homme du métier. Cette méthode permet d'explorer les relations entre différentes variables impliquées dans une expérience. La méthode des surfaces de réponse fait généralement intervenir un plan d'expériences, c'est-à-dire une suite ordonnée d'essais d'une expérimentation basée sur le contrôle d'un ou plusieurs paramètres d'entrée en vue d'obtenir un résultat. Dans le cadre de l'invention, le plan d'expériences fait de préférence intervenir des calculs numériques (simulation numérique). Le plan d'expériences peut également faire intervenir des essais sur des aubes. A partir des paramètres d'entrée et des résultats obtenus, il est alors possible en mettant en œuvre la méthode des surfaces de réponse de générer une surface de réponse prédictive. Cette surface de réponse prédictive permet à partir d'une ou plusieurs données d'entrée d'estimer une ou plusieurs données de sortie. On comprendra que dans le cadre de l'invention la surface de réponse prédictive permet à partir des paramètres structuraux mesurés à froid sur une aube 18 d'estimer les paramètres structuraux en fonctionnement de ladite aube 18, pour un régime moteur donné. La méthode des surfaces de réponse appliquée au plan d'expériences est par exemple décrite dans le document R. Myers, D. Montgomery, « Response Surface Methodology, Process and product Optimization Using designed Experiments », Wiley, 1995.

La surface de réponse prédictive peut également être validée par mesures sur banc d'essai de soufflantes.

En particulier, des mesures par Tip Timing peuvent par exemple être réalisées pour mesurer l'angle de calage CHORD_ANGLE en fonctionnement, notamment en tête d'aube 20. Les mesures Tip Timing permettent par exemple de détecter en temps réel le passage du bord d'attaque 21 et du bord de fuite 22, en tête d'aube 20, de chacune des aubes 18, de sorte à déterminer expérimentalement l'angle de calage CHORD_ANGLE de chacune des aubes 18 et ce pour différents régimes moteur N de la turbomachine 10.

L'utilisation d'une telle surface de réponse prédictive permet par exemple d'obtenir une précision de 0.02° en ce qui concerne l'angle de calage CHORD_ANGLE. Cette précision peut ensuite être validée par les mesures tip timing précitées.

L'étape de détermination 104 de l'ordonnancement optimal des aubes 18 autour du disque 16 est par exemple réalisée par calculs numériques, notamment par simulation numérique. Ces calculs numériques peuvent en outre prendre en compte des critères d'équilibrage mécanique, tel que la suppression d'un balourd sur la soufflante 11. On peut notamment utiliser n'importe quel algorithme d'optimisation discrète tel que la recherche tabou, le recuit orienté, l'algorithme génétique ou l'algorithme des colonies de fourmis. Tous ces algorithmes sont connus de l'état de la technique.

Le procédé 100 de fabrication présente l'avantage de déterminer l'ordonnancement optimal des aubes 18 à partir de paramètres structuraux en fonctionnement des aubes 18, et ainsi de tenir compte des comportements de chacune des aubes 18 qui peuvent varier d'une aube 18 à une autre, lorsque la turbomachine 10 est en fonctionnement. L'ordonnancement optimal ainsi déterminé réduit donc le niveau de bruit de la soufflante 11 aux fréquences FMR de manière plus efficace.

Le procédé 100 de fabrication présente en outre l'avantage de réduire les vibrations de la soufflante 11 qui sont dues à un balourd mécanique et/ou aérodynamique créé par les différences géométriques entre les aubes 18.

## Revendications

1. Procédé (100) pour la fabrication d'une soufflante (11) de turbomachine (10) comprenant une pluralité d'aubes (18) montées sur un disque (16) s'étendant autour d'un axe longitudinal (13), ledit procédé comprenant les étapes suivantes de :
- mesure (102) à froid d'au moins un paramètre structurel sur chacune des aubes (18),
- estimation (103) pour chacune des aubes (18) d'au moins un paramètre structurel en fonctionnement relatif à une aube (18) à partir du ou des paramètres structuraux mesurés à froid sur ladite aube (18),
- détermination (104) d'un ordonnancement optimal (ORD) des aubes (18) autour du disque (16) à partir de paramètres structuraux estimés en fonctionnement obtenus pour chacune des aubes (18), de sorte à réduire le niveau de bruit à des fréquences multiples de rotation (FMR) de la soufflante (11),
- montage (105) des aubes (18) sur le disque (16) selon l'ordonnancement optimal (ORD) ainsi déterminé.

2. Procédé (100) selon la revendication 1, dans lequel l'estimation (103) en fonctionnement du ou des paramètres structuraux d'une aube (18) est réalisée à partir du ou des paramètres structuraux mesurés à froid sur ladite aube (18) et d'une surface de réponse prédictive préalablement générée par la méthode des surfaces de réponse (MSR) à laquelle sont appliqués le ou les paramètres structuraux mesurés à froid de l'aube (18).

3. Procédé (100) selon la revendication 1 ou la revendication 2, dans lequel le ou les paramètres structuraux mesurés à froid sur l'aube (18) sont choisis parmi :
- la position du centre de gravité (X_{Gs}, Y_{Gs}) d'une section de l'aube (18) à une hauteur de coupe donnée (h_{c}) de ladite aube, et/ou
- l'angle de calage (CHORD_ANGLE) de l'aube (18) à une hauteur de coupe donnée (h_{c}) de ladite aube, et/ou
- l'angle de bord d'attaque (LE_ANGLE) de l'aube (18) à une hauteur de coupe donnée (h_{c}) de ladite aube, et/ou
- l'angle de bord de fuite (TE_ANGLE) de l'aube (18) à une hauteur de coupe donnée (h_{c}) de ladite aube.

4. Procédé (100) selon l'une des revendications 1 à 3, dans lequel le ou les paramètres structuraux mesurés à froid sur l'aube (18) sont choisis parmi :
- la position du centre de gravité (X_{Gs}, Y_{Gs}) d'une section de l'aube (18) à une hauteur de coupe donnée (h_{c}) de ladite aube, et/ou
- la longueur (L, L1, L2) de la corde (26) de l'aube (18) à une hauteur de coupe donnée (h_{c}) de ladite aube, et/ou
- l'angle de calage (CHORD_ANGLE) de l'aube (18) à une hauteur de coupe donnée (h_{c}) de ladite aube, et/ou
- l'angle de bord d'attaque (LE_ANGLE) de l'aube (18) à une hauteur de coupe donnée (h_{c}) de ladite aube, et/ou
- l'angle de bord de fuite (TE_ANGLE) de l'aube (18) à une hauteur de coupe donnée (h_{c}) de ladite aube, et/ou
- la hauteur totale (H) de l'aube (18), et/ou
- le moment statique radial (R) et/ou axial (A) et/ou tangentiel (T) de l'aube (18), et/ou
- la masse de l'aube (18).

5. Procédé (100) selon l'une des revendications 1 à 4, dans lequel le ou les paramètres structuraux estimés en fonctionnement de l'aube (18) sont choisis parmi :
- l'angle de calage (CHORD_ANGLE) de l'aube (18) à une hauteur de coupe donnée (h_{c}) de ladite aube, et/ou
- l'angle de bord d'attaque (LE_ANGLE) de l'aube (18) à une hauteur de coupe donnée (h_{c}) de ladite aube, et/ou
- l'angle de bord de fuite (TE_ANGLE) de l'aube (18) à une hauteur de coupe donnée (h_{c}) de ladite aube.

6. Procédé (100) selon l'une des revendications 1 à 5, dans lequel le ou les paramètres structuraux estimés en fonctionnement de l'aube (18) sont choisis parmi :
- la position du centre de gravité (X_{Gs}, Y_{Gs}) d'une section de l'aube (18) à une hauteur de coupe donnée (h_{c}) de ladite aube, et/ou
- la longueur (L, L1, L2) de la corde (26) de l'aube (18) à une hauteur de coupe donnée (h_{c}) de ladite aube, et/ou
- l'angle de calage (CHORD_ANGLE) de l'aube (18) à une hauteur de coupe donnée (h_{c}) de ladite aube, et/ou
- l'angle de bord d'attaque (LE_ANGLE) de l'aube (18) à une hauteur de coupe donnée (h_{c}) de ladite aube, et/ou
- l'angle de bord de fuite (TE_ANGLE) de l'aube (18) à une hauteur de coupe donnée (h_{c}) de ladite aube, et/ou
- la hauteur totale (H) de l'aube (18), et/ou
- le moment statique radial (R) et/ou axial (A) et/ou tangentiel (T) de l'aube (18), et/ou
- la masse de l'aube (18).

7. Procédé (100) selon l'une des revendications 3 à 6, dans lequel la hauteur de coupe donnée (h_{c}) est prise à 90% de la hauteur totale (H) de l'aube (18) à partir du pied (19) de ladite aube.

8. Soufflante (11) de turbomachine (10) obtenue par la mise en œuvre du procédé (100) de fabrication selon l'une quelconque des revendications 1 à 7.

9. Turbomachine (10) comprenant une soufflante (11) selon la revendication 8.

## Patentansprüche

1. Verfahren (100) zur Herstellung eines Gebläses (11) einer Turbomaschine (10), eine Vielzahl von Schaufeln (18) umfassend, die auf einer Scheibe (16) angebracht sind, die sich um eine Längsachse (13) herum erstreckt, wobei das Verfahren die folgenden Schritte umfasst:
- Messen (102), im kalten Zustand, mindestens eines Strukturparameters an jeder der Schaufeln (18),
- Schätzen (103), für jede der Schaufeln (18), mindestens eines Strukturparameters im Betrieb in Bezug auf eine Schaufel (18) ausgehend von dem oder den im kalten Zustand an der Schaufel (18) gemessenen Strukturparametern,
- Bestimmen (104) einer optimalen Reihung (ORD) der Schaufeln (18) um die Scheibe (16) herum, ausgehend von im Betrieb geschätzten Strukturparametern, die für jede der Schaufeln (18) erhalten werden, um den Geräuschpegel in mehreren Drehfrequenzen (FMR) des Gebläses (11) zu reduzieren,
- Anbringen (105) der Schaufeln (18) an der Scheibe (16) entsprechend der so bestimmten optimalen Reihung (ORD).

2. Verfahren (100) nach Anspruch 1, wobei das Schätzen (103), im Betrieb, des oder der Strukturparameter einer Schaufel (18) ausgehend von dem oder den im kalten Zustand an der Schaufel (18) gemessenen Strukturparametern, und einer zuvor durch das Wirkungsflächenverfahren (MSR) generierten vorhersagenden Wirkungsfläche realisiert wird, auf die der oder die im kalten Zustand gemessenen Strukturparameter der Schaufel (18) angewendet werden.

3. Verfahren (100) nach Anspruch 1 oder Anspruch 2, wobei der oder die im kalten Zustand an der Schaufel (18) gemessenen Strukturparameter ausgewählt werden aus:
- der Position des Schwerpunkts (X_{GS}, Y_{GS}) einer Sektion der Schaufel (18) auf einer gegebenen Schnitthöhe (h_{c}) der Schaufel, und/oder
- dem Stellwinkel (CHORD_ANGLE) der Schaufel (18) auf einer gegebenen Schnitthöhe (h_{c}) der Schaufel, und/oder
- dem Vorderkantenwinkel (LE_ANGLE) der Schaufel (18) auf einer gegebenen Schnitthöhe (h_{c}) der Schaufel, und/oder
- dem Hinterkantenwinkel (TE_ANGLE) der Schaufel (18) auf einer gegebenen Schnitthöhe (h_{c}) der Schaufel.

4. Verfahren (100) nach einem der Ansprüche 1 bis 3, wobei der oder die im kalten Zustand an der Schaufel (18) gemessenen Strukturparameter ausgewählt werden aus:
- der Position des Schwerpunktes (X_{GS}, Y_{GS}) einer Sektion der Schaufel (18) auf einer gegebenen Schnitthöhe (h_{c}) der Schaufel, und/oder
- der Länge (L, L1, L2) der Sehne (26) der Schaufel (18) auf einer gegebenen Schnitthöhe (h_{c}) der Schaufel, und/oder
- dem Stellwinkel (CHORD_ANGLE) der Schaufel (18) auf einer gegebenen Schnitthöhe (h_{c}) der Schaufel, und/oder
- dem Vorderkantenwinkel (LE_ANGLE) der Schaufel (18) auf einer gegebenen Schnitthöhe (h_{c}) der Schaufel, und/oder
- dem Hinterkantenwinkel (TE_ANGLE) der Schaufel (18) auf einer gegebenen Schnitthöhe (h_{c}) der Schaufel und/oder
- der Gesamthöhe (H) der Schaufel (18), und/oder
- dem radialen (R) und/oder axialen (A) und/oder tangentialen (T) Flächenmoment der Schaufel (18) und/oder
- der Masse der Schaufel (18).

5. Verfahren (100) nach einem der Ansprüche 1 bis 4, wobei der oder die im Betrieb der Schaufel (18) geschätzten Strukturparameter ausgewählt werden aus:
- dem Stellwinkel (CHORD_ANGLE) der Schaufel (18) auf einer gegebenen Schnitthöhe (h_{c}) der Schaufel, und/oder
- dem Vorderkantenwinkel (LE_ANGLE) der Schaufel (18) auf einer gegebenen Schnitthöhe (h_{c}) der Schaufel, und/oder
- dem Hinterkantenwinkel (TE_ANGLE) der Schaufel (18) auf einer gegebenen Schnitthöhe (h_{c}) der Schaufel.

6. Verfahren (100) nach einem der Ansprüche 1 bis 5, wobei der oder die im Betrieb der Schaufel (18) geschätzten Strukturparameter ausgewählt werden aus:
- der Position des Schwerpunktes (X_{GS}, Y_{GS}) einer Sektion der Schaufel (18) auf einer gegebenen Schnitthöhe (h_{c}) der Schaufel, und/oder
- der Länge (L, L1, L2) der Sehne (26) der Schaufel (18) auf einer gegebenen Schnitthöhe (h_{c}) der Schaufel, und/oder
- dem Stellwinkel (CHORD_ANGLE) der Schaufel (18) auf einer gegebenen Schnitthöhe (h_{c}) der Schaufel, und/oder
- dem Vorderkantenwinkel (LE_ANGLE) der Schaufel (18) auf einer gegebenen Schnitthöhe (h_{c}) der Schaufel, und/oder
- dem Hinterkantenwinkel (TE_ANGLE) der Schaufel (18) auf einer gegebenen Schnitthöhe (h_{c}) der Schaufel und/oder
- der Gesamthöhe (H) der Schaufel (18), und/oder
- dem radialen (R) und/oder axialen (A) und/oder tangentialen (T) Flächenmoment der Schaufel (18) und/oder
- der Masse der Schaufel (18).

7. Verfahren (100) nach einem der Ansprüche 3 bis 6, wobei die gegebene Schnitthöhe (h_{c}) auf 90 % der Gesamthöhe (H) der Schaufel (18) ausgehend vom Fuß (19) der Schaufel angenommen wird.

8. Gebläse (11) einer Turbomaschine (10), das durch die Umsetzung des Verfahrens (100) zur Herstellung nach einem der Ansprüche 1 bis 7 erhalten wird.

9. Turbomaschine (10), ein Gebläse (11) nach Anspruch 8 umfassend.

## Claims

1. A method (100) for manufacturing a turbomachine (10) fan (11) comprising a plurality of blades (18) mounted on a disk (16) extending around a longitudinal axis (13), said method comprising the following steps of:
- measuring (102) in the cold state at least one structural parameter on each of the blades (18),
- estimating (103), for each of the blades (18), at least one structural parameter in operation relating to a blade (18) from the structural parameter(s) measured in the cold state on said blade (18),
- determining (104) an optimal sequence (ORD) of the blades (18) around the disk (16) from structural parameters estimated in operation obtained for each of the blades (18), so as to reduce the noise level at multiple rotational frequencies (FMR) of the fan (11),
- mounting (105) the blades (18) on the disk (16) in the optimal sequence (ORD) thus determined,

2. The method (100) according to claim 1, wherein the estimation (103) in operation of the structural parameter(s) of a blade (18) is performed from the structural parameter(s) measured in the cold state on said blade (18) and from a predictive response surface previously generated by the response surface method (MSR) to which are applied the structural parameter(s) measured in the cold state of the blade (18).

3. The method (100) according to claim 1 or claim 2, wherein the structural parameter(s) measured in the cold state on the blade (18) are selected from:
- the position of the centre of gravity (X_{Gs}, Y_{Gs}) of a section of the blade (18) at a given cross-sectional height (h_{c}) of said blade, and/or
- the stagger angle (CHORD_ANGLE) of the blade (18) at a given cross-sectional height (h_{c}) of said blade, and/or
- the leading edge angle (LE_ANGLE) of the blade (18) at a given cross-sectional height (h_{c}) of said blade, and/or
- the trailing edge angle (TE_ANGLE) of the blade (18) at a given cross-sectional height (h_{c}) of said blade.

4. The method (100) according to one of claims 1 to 3, wherein the structural parameter(s) measured in the cold state on the blade (18) are selected from:
- the position of the centre of gravity (X_{Gs}, Y_{Gs}) of a section of the blade (18) at a given cross-sectional height (h_{c}) of said blade, and/or
- the length (L, L1, L2) of the chord (26) of the blade (18) at a given cross-sectional height (h_{c}) of said blade, and/or
- the stagger angle (CHORD_ANGLE) of the blade (18) at a given cross-sectional height (h_{c}) of said blade, and/or
- the leading edge angle (LE_ANGLE) of the blade (18) at a given cross-sectional height (h_{c}) of said blade, and/or
- the trailing edge angle (TE_ANGLE) of the blade (18) at a given cross-sectional height (h_{c}) of said blade, and/or
- the total height (H) of the blade (18), and/or
- the radial (R) and/or axial (A) and/or tangential (T) static moment of the blade (18), and/or
- the mass of the blade (18).

5. The method (100) according to one of claims 1 to 4, wherein the structural parameter(s) estimated in operation of the blade (18) are selected from:
- the stagger angle (CHORD_ANGLE) of the blade (18) at a given cross-sectional height (h_{c}) of said blade, and/or
- the leading edge angle (LE_ANGLE) of the blade (18) at a given cross-sectional height (h_{c}) of said blade, and/or
- the trailing edge angle (TE_ANGLE) of the blade (18) at a given cross-sectional height (h_{c}) of said blade.

6. The method (100) according to one of claims 1 to 5, wherein the structural parameter(s) estimated in operation of the blade (18) are selected from:
- the position of the centre of gravity (X_{Gs}, Y_{Gs}) of a section of the blade (18) at a given cross-sectional height (h_{c}) of said blade, and/or
- the length (L, L1, L2) of the chord (26) of the blade (18) at a given cross-sectional height (h_{c}) of said blade, and/or
- the stagger angle (CHORD_ANGLE) of the blade (18) at a given cross-sectional height (h_{c}) of said blade, and/or
- the leading edge angle (LE_ANGLE) of the blade (18) at a given cross-sectional height (h_{c}) of said blade, and/or
- the trailing edge angle (TE_ANGLE) of the blade (18) at a given cross-sectional height (h_{c}) of said blade, and/or
- the total height (H) of the blade (18), and/or
- the radial (R) and/or axial (A) and/or tangential (T) static moment of the blade (18), and/or
- the mass of the blade (18).

7. The method (100) according to one of claims 3 to 6, wherein the given cross-sectional height (h_{c}) is taken as 90% of the total height (H) of the blade (18) from the root (19) of said blade.

8. A turbomachine (10) fan (11) obtained by the implementation of the manufacturing method (100) according to any one of claims 1 to 7.

9. A turbomachine (10) comprising a fan (11) according to claim 8.
